# EUROPEAN PATENT APPLICATION

(11) **EP 3 715 799 A1**
(43) Date of publication of application: **30.09.2020**
(21) Application number: 18880567.5
(22) Date of filing: 12.11.2018
(51) Int. Cl.: G01F 23/00

(54) **SMART AGENT CONTAINER COVER, SMART AGENT CONTAINER, AND AIRCRAFT**

(30) Priority: 21.11.2017 CN 201721571936 U
(71) Applicant: Guangzhou Xaircraft Technology Co., Ltd., Tianhe District Guangzhou Guangdong 510000 (CN)
(72) Inventor: PENG, Bin, Guangzhou Guangdong 510000 (CN); HUANG, Yaolin, Guangzhou Guangdong 510000 (CN)
(74) Representative: Barker Brettell LLP
(86) International application number: PCT/CN2018/115043
(87) International publication number: WO 2019/100965

(57) **Abstract**

A smart agent container cover (100), a smart agent container, and an aircraft are provided. The smart agent container cover (100) includes an upper cover (11), a lower cover (10), a control module (3), a liquid level measuring module (2), a communication module (4), and a power supply module (5). The upper cover (11) and the lower cover (10) define a sealed accommodating space therebetween. Electronic components, such as the control module (3), the communication module (4), and the power supply module (5), are all arranged within the accommodating space, and have no electrically conductive physical contact with an external environment. During use, only the liquid level measuring module (2) is submerged below a liquid surface, such that the electronic components are better protected, thereby ensuring the stability and accuracy of liquid level measurement, prolonging the service life of the smart agent container and the agent container cover (100) thereof, and guaranteeing precise spraying by an unmanned aerial vehicle.

## Description

### Technical Field

The disclosure relates to the technical field of plant protection, and more particularly, to a smart agent container cover, and a smart agent container and an aircraft adopting the smart agent container cover.

### Background

A smart agent container has the characteristics of automatically weighing agents contained therein, is used for real-time and accurate statistics of the current dosage of agents, and plays an important role in the process of aviation agent precision spraying of unmanned aerial vehicles.

The smart agent container includes an agent container body and a smart agent container cover connected with the agent container body. The smart agent container cover is used for detecting the height of liquid (that is, liquid level) in the agent container, and feeding back a detection result to a control system of an unmanned aerial vehicle to control spraying of the agent according to a liquid level detection result.

However, due to lack of protection, a control module, a communication module and a power supply module inside the smart agent container cover are easily damaged by external forces or damaged by the corrosion of medicine liquid during long-term use, and the service life is not long.

### Summary

A primary object of the disclosure is to provide a smart agent container cover with long service life, low maintenance difficulty and low cost.

Another object of the disclosure is to provide a smart agent container adopting the above smart agent container cover.

Yet another object of the disclosure is to provide an aircraft adopting the above smart agent container.

To achieve the above objects, the disclosure provides the following technical solutions.

A smart agent container cover may include: an agent container cover body, and a liquid level measuring module, a control module, a communication module, and a power supply module, which are arranged on the agent container cover body respectively. The liquid level measuring module and the communication module are electrically connected to the control module. The control module receives and processes a detection result of the liquid level measuring module and outputs a control instruction to drive the communication module to communicate with an external device. The power supply module supplies power to the smart agent container cover. The agent container cover body includes a lower cover and an upper cover. The lower cover is partitioned into an upper cavity and a lower cavity by a partition, and the upper cover detachably covers the upper cavity and defines a sealed accommodating space with the lower cover. The control module, the communication module and the power supply module are all arranged in the accommodating space. The liquid level measuring module includes a probe, one end of the probe passes through the partition to be electrically connected to the control module, and the other end is configured to stretch into an agent container and is able to abut against a bottom wall of the agent container when the smart agent container cover covers the agent container.

According to an example embodiment, the upper cavity is provided with a circuit board, and the control module, the communication module and the power supply module are integrated in the circuit board. The liquid level measuring module is provided with a conductive contact on the partition, and the conductive contact is electrically connected to the control module on the circuit board.

According to an example embodiment, the circuit board is provided with multiple fixing holes, and the partition is provided with a stud corresponding to each of the fixing holes, wherein a screw passes through the fixing hole to connect to the stud to fix the circuit board to the partition.

According to an example embodiment, the upper cover and the lower cover are in threaded connection, buckled connection or interference fit.

According to an example embodiment, the communication module is a wireless communication module configured to wirelessly communicate with an external device.

According to an example embodiment, a lower surface of the partition is provided with lateral reinforcing ribs configured to strengthen the partition.

According to an example embodiment, the power supply module includes a button battery.

According to an example embodiment, a side wall of the lower cover is evenly provided with multiple grooves.

In addition, the disclosure also relates to a smart agent container, which may include an agent container body and the above smart agent container cover. The smart agent container cover covers a top end of the agent container body, and a probe stretches into the agent container body.

According to an example embodiment, the agent container body is inverted L-shaped.

In addition, the disclosure also relates to an aircraft. The aircraft includes an aircraft body, and the above smart agent container arranged on the aircraft body. The communication module is electrically connected to the aircraft body.

Compared with the conventional art, the solution of the disclosure has the following advantages.
1. According to the smart agent container cover of the disclosure, electronic components such as a control module, a communication module and a power supply module are arranged in a sealed accommodating space on a cover body. External forces can be prevented from damaging or liquid can be prevented from entering, resulting in the failure of the electronic components. The service life of the smart agent container cover is effectively prolonged, thereby providing a guarantee for the stable and accurate operation of the smart agent container cover.
2. In the smart agent container cover, the upper cover and the lower cover are detachably connected by means of interference fit, etc., which facilitates the maintenance of the smart agent container cover.
3. The smart agent container cover is provided with a plurality of grooves on the outer periphery, which increases the friction between a user and the agent container cover during use, and prevents the problem that the agent container cover is not easy to open due to the wet surface.

Additional aspects and advantages of the disclosure will be set forth in part in the following description. These aspects and advantages will become apparent from the following description, or will be understood by the practice of the disclosure.

### Brief Description of the Drawings

The above and/or additional aspects and advantages of the disclosure will become apparent and readily understood from the description of the embodiments in conjunction with the accompanying drawings, where

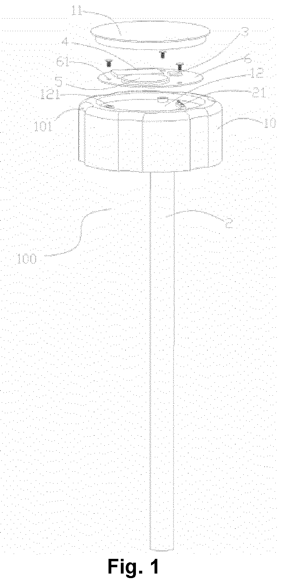

Fig. 1 is an exploded view of a smart agent container cover according to the disclosure.

### Detailed Description of the Embodiments

The embodiments of the disclosure are described in detail below, and the examples of the embodiments are illustrated in the drawings, where the same or similar reference numerals are used to refer to the same or similar elements or elements having the same or similar functions. The embodiments described below with reference to the drawings are intended to be illustrative of the disclosure and are not to be construed as limiting the disclosure.

The disclosure provides a smart agent container cover, which is suitable for a smart agent container, and is further installed on an aircraft, such as an unmanned aerial vehicle, together with the smart agent container. The smart agent container cover is configured to detect the liquid level of liquid in the smart agent container in real time, and feed back a detection result to a control system of the unmanned aerial vehicle, so that the unmanned aerial vehicle performs specific operations according to the detection result. For example, when the liquid level is lower than a predetermined height, the unmanned aerial vehicle will land and notify a user to fill an agent.

As shown in Fig. 1, the smart agent container cover 100 includes an agent container cover body (not labeled, similarly hereinafter), and a liquid level measuring module 2, a control module 3, a communication module 4, and a power supply module 5, which are arranged on the agent container cover body respectively. The liquid level measuring module 2 and the communication module 4 are electrically connected to the control module 3. The control module 3 receives and processes a detection result of the liquid level measuring module 2 and outputs a control instruction to drive the communication module 4 to communicate with the unmanned aerial vehicle (not labeled, similarly hereinafter). The power supply module 5 supplies power to the smart agent container cover 100.

The agent container cover body includes a lower cover 10 and an upper cover 11. The lower cover 10 is partitioned into an upper cavity (not labeled) and a lower cavity (not labeled) by a partition 12. The upper cover 11 detachably covers the upper cavity and defines a sealed accommodating space with the lower cover 10. An inner wall of the lower cavity is formed with an internal thread in threaded connection with an agent container opening of the smart agent container (not labeled, similarly hereinafter).

A circuit board 6 is fixed in the accommodating space, and the control module 3, the communication module 4 and the power supply module 5 are all arranged on the circuit board 6.

The liquid level measuring module 2 includes a probe, one end of the probe passes through the partition 12 to be electrically connected to the control module 3, and the other end is configured to stretch into an agent container and is able toabut against a bottom wall of the agent container when the smart agent container cover 100 covers the agent container.

Therefore, when the smart agent container cover 100 is used, only the probe of the liquid level measuring module is arranged under the lower cover 10 and enters liquid to be measured to measure the liquid level height. The control module 3, the communication module 4, the power supply module 5 and other electronic components are all arranged in a sealed space at the upper part of the lower cover 10, which can prevent the liquid from entering and corroding the electronic components, and also avoid damage due to external forces, thereby prolonging the service life of the smart agent container cover 100, and providing a guarantee for the stable and accurate operation of the smart agent container.

According to at least one alternative embodiment, the liquid level measuring module 2 is provided with a conductive contact 21 on the partition, and the conductive contact 21 is electrically connected to the control module on the circuit board 6.

According to at least one alternative embodiment, the circuit board 6 is provided with multiple fixing holes 61 distributed evenly, and the partition 12 is provided with a stud 121 corresponding to each of the fixing holes, wherein a screw passes through the fixing hole 61 to connect to the stud 121 to fix the circuit board 6 to the partition 12. In other implementation manners, the fixing holes may be unevenly distributed on the circuit board to avoid electronic components or conductors on the circuit board.

According to at least one alternative embodiment, the upper cover 11 and the lower cover 10 are detachably connected in threaded connection, buckled connection or interference fit, thereby facilitating assembly and disassembly of the upper cover and the lower cover, and facilitating the repair and maintenance of the smart agent container cover.

According to at least one alternative embodiment, the communication module 4 is a wireless communication module, such as a Bluetooth communication module, configured to wirelessly communicate with the unmanned aerial vehicle. By setting the communication between the smart agent container cover 100 and the unmanned aerial vehicle as wireless communication, the wiring problem of a communication cable can be avoided.

It should be understood that in the present implementation manner, the smart agent container cover and the unmanned aerial vehicle communicate via a Bluetooth communication module, but it is not excluded that the smart agent container cover and the unmanned aerial vehicle communicate through a communication cable.

According to at least one alternative embodiment, a lower surface of the partition 12 is provided with lateral reinforcing ribs (not labeled) configured to strengthen the partition.

According to at least one alternative embodiment, the power supply module 5 includes a button battery.

In other implementation manners, the power supply module 5 may further include a charging interface provided on the side wall of the lower cover 10, a charging circuit arranged on the circuit board, and a rechargeable battery, so as to supply power to the smart agent container cover in various ways to prevent the liquid level detection result from being affected when the button battery has insufficient power. Correspondingly, the charging interface is sealed to prevent liquid from entering the upper cavity through the charging interface.

According to at least one alternative embodiment, multiple grooves 101 are evenly formed on the side wall of the lower cover 10 to change the outer shape of the lower cover, thereby increasing the friction between the lower cover 10 and the palm of a user during use, and facilitating the opening or closing of the agent container cover 100.

In addition, the disclosure also relates to a smart agent container, which may include an agent container body and the above smart agent container cover. The smart agent container cover covers a top end of the agent container body, and a probe stretches into the agent container body, so as to automatically measure the liquid level height of liquid in the agent container body.

Because all the electronic components of the smart agent container cover are located in a sealed storage space, and have no electrically conductive physical contact with an external environment. During use, only the liquid level measuring module is submerged into the measured liquid to automatically measure the liquid level height, so that the stability, accuracy and durability of the smart agent container are improved. The upper cover and the lower cover are detachably connected by interference fit, etc., which is easy to use and reduces the difficulty of maintenance operation of the agent container. In addition, because there are fewer accessories used, no special waterproof sealing design is required, which reduces the production cost.

According to at least one alternative embodiment, the agent container body is inverted L-shaped, and an internal space of the agent container body configured to contain medicine liquid is also L-shaped. On the one hand, it is convenient for the plug-in installation between the smart agent container and the unmanned aerial vehicle; on the other hand, the shaking of an agent during the spraying process can be avoided, and the accuracy of the liquid level measurement result is ensured.

As a third aspect, the disclosure also relates to an aircraft, which may include an aircraft body. The aircraft body is provided with the above smart agent container. The communication module is electrically connected to the aircraft body. Since the above smart agent container is adopted, the detection accuracy of the liquid level in the agent container is high, and the spray accuracy and stability of the unmanned aerial vehicle are high.

The above are some implementation manners of the disclosure. It is to be noted that a number of modifications and refinements may be made by those of ordinary skill in the art without departing from the principles of the disclosure, and such modifications and refinements are also considered to be within the scope of protection of the disclosure.

## Claims

1. A smart agent container cover, comprising: an agent container cover body, and a liquid level measuring module, a control module, a communication module, and a power supply module, which are arranged on the agent container cover body respectively, wherein the liquid level measuring module and the communication module are electrically connected to the control module, the control module receives and processes a detection result of the liquid level measuring module and outputs a control instruction to drive the communication module to communicate with an external device, and the power supply module supplies power to the smart agent container cover;
the agent container cover body comprises a lower cover and an upper cover, the lower cover is partitioned into an upper cavity and a lower cavity by a partition, and the upper cover detachably covers the upper cavity and defines a sealed accommodating space with the lower cover;
the control module, the communication module and the power supply module are all arranged in the accommodating space; and
the liquid level measuring module comprises a probe, one end of the probe passes through the partition to be electrically connected to the control module, and the other end is configured to stretch into an agent container and is able to abut against a bottom wall of the agent container when the smart agent container cover covers the agent container.

2. The smart agent container cover as claimed in claim 1, wherein the upper cavity is provided with a circuit board, and the control module, the communication module and the power supply module are integrated in the circuit board; and
the liquid level measuring module is provided with a conductive contact on the partition, and the conductive contact is electrically connected to the control module on the circuit board.

3. The smart agent container cover as claimed in claim 2, wherein the circuit board is provided with a plurality of fixing holes, and the partition is provided with a stud corresponding to each of the fixing holes, wherein a screw passes through the fixing hole to connect to the stud to fix the circuit board to the partition.

4. The smart agent container cover as claimed in claim 1, wherein the upper cover and the lower cover are in threaded connection, buckled connection or interference fit.

5. The smart agent container cover as claimed in claim 1, wherein the communication module is a wireless communication module configured to wirelessly communicate with an external device.

6. The smart agent container cover as claimed in claim 1, wherein a lower surface of the partition is provided with lateral reinforcing ribs configured to strengthen the partition.

7. The smart agent container cover as claimed in claim 1, wherein the power supply module comprises a button battery.

8. The smart agent container cover as claimed in any one of claims 1 to 7, wherein a side wall of the lower cover is evenly provided with a plurality of grooves.

9. A smart agent container, comprising an agent container body and an agent container cover, wherein the agent container cover is a smart agent container cover as claimed in any one of claims 1 to 7, which covers a top end of the agent container body, and a probe stretches into the agent container body.

10. The smart agent container as claimed in claim 9, wherein the agent container body is inverted L-shaped.

11. An aircraft, comprising an aircraft body, wherein the aircraft body is provided with a smart agent container as claimed in claim 9 or 10, and the communication module is electrically connected to the aircraft body.
